# EUROPEAN PATENT APPLICATION

(11) **EP 4 691 867 A1**
(43) Date of publication of application: **11.02.2026**
(21) Application number: 24193771.3
(22) Date of filing: 09.08.2024
(51) Int. Cl.: B60T 17/04, B60T 17/08

(54) **SPRING BRAKE ACTUATOR COMPRISING A BRAKE LINE BRACKET**

(71) Applicant: ZF CV Systems Europe BV, 1170 Brüssel (BE)
(72) Inventor: SWIATKIEWICZ, Jakub, 54-109 Wroclaw (PL); ZYGADLO, Krzysztof, 58-212 Jazwina (PL); FRANZ, Janusz, 51-152 Wroclaw (PL)
(74) Representative: Schäferjohann, Volker

(57) **Abstract**

A spring brake actuator comprising a brake line bracket for supporting brake line cables. The bracket is mounted on the housing of the spring brake actuator through threaded elements, for instance pierce-clinch fasteners or welded fasteners that hold it together with the housing of the spring brake actuator without involving other structural components.

## Description

### Field of the invention

The invention relates to a spring brake actuator comprising a brake line bracket mounted on the housing of the spring brake actuator through the use of threaded elements, for instance pierce-clinch fasteners or welded fasteners. The invention also relates to a commercial vehicle comprising such a spring brake actuator.

### Background of the invention

The invention relates to a spring brake actuator preferably providing both a service brake function and a parking brake function, and comprising a brake line bracket mounted on the housing of the spring brake actuator through the use of threaded elements. The brake line bracket serves the purpose of supporting brake line cables.

Spring brakes are used for parking brakes, as well as in auxiliary and emergency braking systems. If there is no compressed air in the braking system, a compression spring is expanded, and the brake is applied. This keeps a commercial vehiclefirmly in place, even on an inclined plane. The parking brake must be released to start the vehicle. To do so, compressed air is used to compress the spring and therefore release the brake.

More in detail, a spring brake actuator is used to drive a spring brake The spring brake actuator is operated using compressed air provided by a compressed-air supply container, which is filled by a compressor. The spring brake actuator comprises one or more pressure chambers and at least one diaphragm, which moves a push rod to operate a disc brake or a drum brake of the vehicle when the pressure chamber is filled with compressed air during a braking action being initiated by a respective driver of a vehicle.

The spring brake actuator typically contains a compression spring providing a force for actuating the parking brake function. The compression spring force acts on a parking piston, or a second diaphragm, via which the push rod is actuated. The compression spring can be compressed by a force appearing on the parking piston by applying compressed air in a parking chamber, which is the normal driving state of the vehicle. When the compressed air is released from the parking chamber, the compression spring expands and shifts the parking piston, which results in the activation of the brake and locking of the vehicle. The service brake function can be operated independently in the normal driving state, by applying compressed air in a service chamber of the spring brake actuator.

Double function brake actuators of this kind combining a service brake function with a parking brake function are known in the art.

The compression spring of the spring brake actuator is located in a chamber or housing of the actuator and rests upon the parking piston and a spring seat fitted to the bottom part of the housing. The spring seat enhances the safety of the spring brake actuator by improving the mechanical stiffness of the housing, which is usually made as a relatively thin sheet metal part. The spring seat is fixed to the bottom part of the housing by several screws.

The bracket for supporting brake line cables is usually fixed to the housing of the spring brake actuator through using at least some of the screws that secure the spring seat to the housing. Often, three screws are used to hold the spring seat to the bottom part of the housing. Two out of those three screws are normally chosen to be longer than the third one, which is of regular length, and are used to not only secure the spring seat to the housing, but also to firmly hold together the bracket to the housing and the spring seat.

In order to improve the mechanical stiffness and the safety of the spring brake actuator, a need has arisen to avoid drilling holes in the spring seat in order to accommodate the screws used in the prior art to hold the spring seat to the housing, therefore there is a need to also dispose of the screws previously used to fix the bracket to the housing and to the spring seat.

An object of the present invention is therefore to provide an alternative way to secure a bracket for supporting brake line cables to the housing of a spring brake actuator, that does not involve connecting the bracket, the housing and the spring seat together. Another object of the present invention is to provide a spring brake actuator that is lighter than the prior art spring brake actuators.

Yet another object of the present invention is to provide a spring brake actuator that is mechanically stiffer and safer than the prior art spring brake actuators.

Another object of the present invention is to provide a spring brake actuator comprising a bracket for supporting brake line cables, that can be freely mounted in different angular positions with respect to the longitudinal axis of the actuator.

Yet another object of the present invention is to provide a spring brake actuator that is cheaper and easier to manufacture than the prior art spring brake actuators.

### Summary of the invention

These and other objects are achieved by a spring brake actuator, preferably providing both a service brake function and a spring brake function. Such a spring brake actuator comprises a housing having a longitudinal axis and a hole located in correspondence with the longitudinal axis.

A boss is fitted to the housing in correspondence with the hole.

The spring brake actuator also comprises a support piston, for instance a parking piston, that defines, together with the housing, an interior space or chamber for receiving components of the spring brake actuator.

A compression spring is located in the interior space or chamber and rests upon the support piston and a spring seat fitted to the housing.

The spring brake actuator of the invention comprises a release bolt having a longitudinal axis which coincides with or is parallel to the longitudinal axis of the housing, the release bolt extending from outside of the spring brake actuator through the hole of the housing. The release bolt is held against the boss of the housing by a release nut.

The spring brake actuator of the invention comprises a bracket for supporting brake line cables, the bracket being mounted on the housing of the spring brake actuator by at least one threaded fastener that only connects the bracket with the housing. In other words, the at least one threaded fastener does not connect the spring seat or any other component, apart from the housing, to the bracket.

According to one aspect, the longitudinal axis of the housing and the longitudinal axis of the release bolt coincide with the longitudinal axis of the spring brake actuator. According to one aspect, the spring seat and the support piston are located on opposite sides, along the longitudinal axis of the spring brake actuator, within the interior space or chamber.

According to a possible embodiment, the spring brake actuator of the invention does not comprise any spring seat since the housing is stiff enough to ensure adequate safety and mechanical resistance against the contact forces exerted by the compression spring. Adequate stiffness of the housing can be obtained, for instance, by choosing a specific material and/or by increasing the width of the metal sheet in correspondence to the bottom of the housing where the forces exerted by the compression spring are higher.

According to an embodiment, the at least one threaded fastener comprises a pierce-clinch element and a counter element to fix the bracket between the pierce-clinch element and the counter element.

According to an aspect of the above embodiment, the pierce-clinch element is a pierce-clinch nut and the counter element comprises a screw.

According to an alternative aspect of the above embodiment, the pierce-clinch element is a pierce-clinch bolt and the counter element comprises a locking nut.

According to an alternative embodiment, the at least one threaded fastener comprises a welded element and a counter element to fix the bracket between the welded element and the counter element.

According to an aspect of the alternative embodiment, the welded element comprises a weld nut and the counter element comprises a screw.

According to an alternative aspect of the alternative embodiment, the welded element comprises a weld stud and the counter element comprises a locking nut.

According to a preferred embodiment, the bracket is mounted on the housing of the spring brake actuator by a plurality of threaded fasteners.

According to an aspect, the boss is welded to the housing.

According to an alternative aspect, the boss is threadedly fixed to the housing.

According to yet another alternative aspect, the boss is punched pressed to the housing.

According to an embodiment, the release nut is held against the release bolt by a pin. The objects of the present invention are also achieved by a commercial vehicle comprising a spring brake actuator as described above.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprises also the number 1, i.e. a single item, and further numbers like 2, 3, 4 and so forth. In the accompanying drawings:

### List of figures

Figure 1 shows a cutout view of a portion of a prior art spring brake actuator;
Figure 2 shows a perspective view of a portion of a spring brake actuator of the invention according to a first embodiment;
Figure 3 shows a cutout detail view of a component of a spring brake actuator of the invention according to the first embodiment;
Figure 4 shows a perspective view of a portion of a spring brake actuator of the invention according to a second embodiment;
Figure 5 shows a cutout detail view of a component of a spring brake actuator of the invention according to the second embodiment.

### Detailed description of the invention

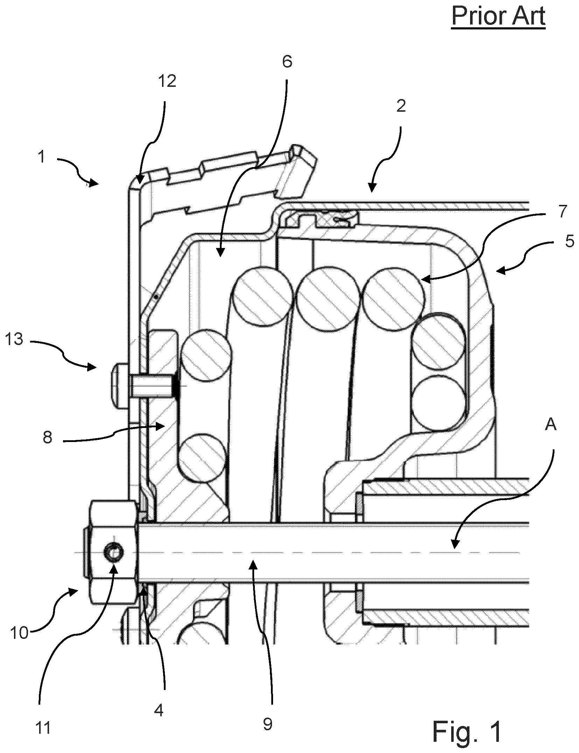

With reference to figure 1, a prior art spring brake actuator 1 is shown. The prior art spring brake actuator 1 comprises a housing 2 having a longitudinal axis A and a hole 4 located in correspondence with the longitudinal axis A.

The spring brake actuator 1 of the prior art comprises a release bolt 9 extending through the hole 4 of the housing 2 to the outside of the spring brake actuator. A support piston 5 defines, together with the housing 2, an interior space 6 for receiving the components of the spring brake actuator.

A compression spring 7 is located in the interior space 6 and rests upon the support piston and a spring seat 8 fitted to the housing. The release bolt 9 is threadedly connected with the spring seat 8 and is being held against the housing 2 by a release nut 10.

The spring seat 8 is fitted to the housing 2 through one or more screws (not shown) having a regular length.

The spring brake actuator of the prior art comprises a bracket 12 for supporting brake line cables, the bracket being mounted on the housing 2 of the spring brake actuator through one or more screws 13 having a length greater than the regular length of the screws only connecting the spring seat with the housing, so that those longer screws are able to firmly hold together the bracket 12, the housing 2 and the spring seat 8. According to the invention, the bracket is instead mounted on the housing of the spring brake actuator by at least one threaded fastener that only connects the bracket with the housing, i.e. without involving the spring seat. Such a solution, which is common to all embodiments, has several advantages, for instance it allows to avoid the use of regular (and even longer than regular) screws in order to fix the bracket to the housing, therefore no piercing of the spring seat is necessary, which brings about an increase in its stiffness and safety. Furthermore, more design freedom is obtained since the bracket can be mounted in several different angular positions with respect to the longitudinal axis A of the spring brake actuator.

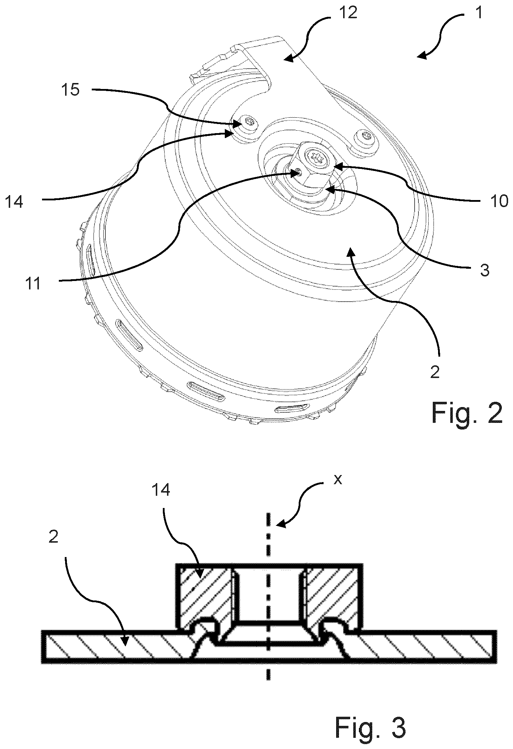

With reference to figure 2, a first embodiment of the invention is shown. The bracket 12 is fixed to the housing 2 of the spring brake actuator 1 through two pierce-clinch nuts 14 that are fixed by respective screws 15.

As shown in figure 3, a pierce-clinch nut 14 having a longitudinal axis X and according to the invention engages the housing 2 of the spring brake actuator 1 without extending, or without substantially extending, into the interior space defined by the housing and the support piston, therefore without involving the spring seat.

As an alternative (not shown) to pierce-clinch nuts, welded nuts may be used which, also in this case, are fixed by respective screws.

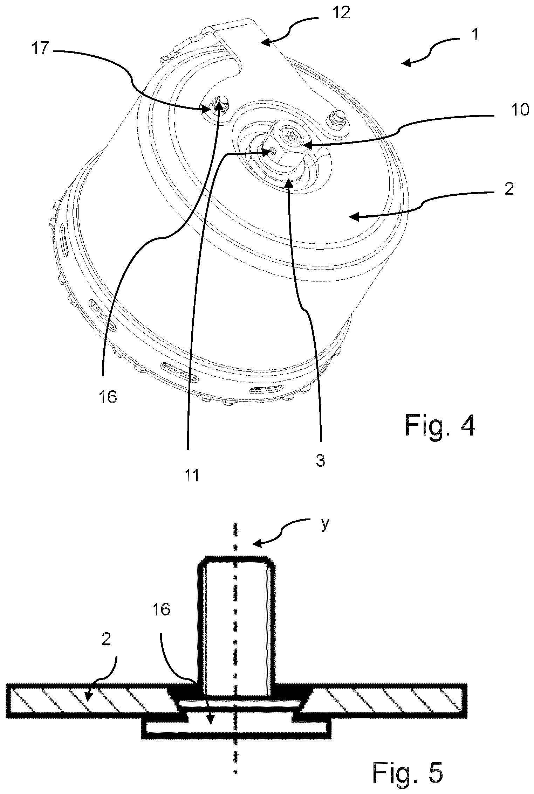

With reference now to figure 4, a second embodiment of the invention is shown. The bracket 12 is fixed to the housing 2 of the spring brake actuator 1 through two pierce-clinch bolts 16 that are fixed by respective locking nuts 17.

As shown in figure 5 and similarly to the case of the first embodiment, a pierce-clinch bolt 16 having a longitudinal axis Y and according to the invention engages the housing 2 of the spring brake actuator 1 without extending, or without substantially extending, into the interior space defined by the housing and the support piston, therefore without involving the spring seat.

Again, as an alternative (not shown) to pierce-clinch bolts, welded studs may be used which, also in this case, are fixed by respective locking nuts.

List of reference signs (part of the description)
- 1: spring brake actuator
- 2: housing
- A: longitudinal axis
- 3: boss
- 4: hole
- 5: support piston
- 6: interior space
- 7: compression spring
- 8: spring seat
- 9: release bolt
- 10: release nut
- 11: pin
- 12: bracket for supporting brake line cables
- 13: prior art screw
- 14: pierce-clinch nut
- 15: screw
- 16: pierce-clinch bolt
- 17: locking nut
- X: longitudinal axis of pierce-clinch nut
- Y: longitudinal axis of pierce-clinch bolt

## Claims

1. A spring brake actuator (1) comprising
a housing (2) having a longitudinal axis (A) and a hole (4) located in correspondence with the longitudinal axis (A);
a boss (3) fitted to the housing (3) in correspondence with the hole (4);
a support piston (5) defining, together with the housing (2), an interior space (6) for receiving components of the spring brake actuator;
a compression spring (7) located in the interior space (6) and resting upon the support piston (5) and a spring seat (8) fitted to the housing (2);
a release bolt (9) having a longitudinal axis which coincides with or is parallel to the longitudinal axis (A) of the housing (2), the release bolt (9) extending from outside of the spring brake actuator through the hole of the housing (2) and being held against the boss (3) of the housing (2) by a release nut (10);
a bracket (12) for supporting brake line cables, the bracket (12) being mounted on the housing (2) of the spring brake actuator by at least one threaded fastener, **characterized in that**
the at least one threaded fastener only connects the bracket (12) with the housing (2).

2. The spring brake actuator (1) according to claim 1, wherein the at least one threaded fastener comprises a pierce-clinch element (14; 16) and a counter element (15; 17) to fix the bracket (12) between the pierce-clinch element and the counter element.

3. The spring brake actuator (1) according to claim 2, wherein the pierce-clinch element is a pierce-clinch nut (14) and the counter element comprises a screw (15).

4. The spring brake actuator (1) according to claim 2, wherein the pierce-clinch element is a pierce-clinch bolt (16) and the counter element comprises a locking nut (17).

5. The spring brake actuator (1) according to claim 1, wherein the at least one threaded fastener comprises a welded element and a counter element to fix the bracket between the welded element and the counter element.

6. The spring brake actuator (1) according to claim 5, wherein the welded element comprises a weld nut and the counter element comprises a screw.

7. The spring brake actuator (1) according to claim 5, wherein the welded element comprises a weld stud and the counter element comprises a locking nut.

8. The spring brake actuator (1) according to any of claims 1 to 7, wherein the bracket (12) is mounted on the housing (2) of the spring brake actuator by a plurality of threaded fasteners.

9. The spring brake actuator (1) according to any of claims 1 to 8, wherein the boss (3) is welded to the housing (2).

10. The spring brake actuator (1) according to any of claims 1 to 8, wherein the boss (3) is threadedly fixed to the housing (2).

11. The spring brake actuator (1) according to any of claims 1 to 8, wherein the boss (3) is punched pressed to the housing (2).

12. The spring brake actuator (1) according to any of claims 1 to 11, wherein the release nut (10) is held against the release bolt (9) by a pin (11).

13. Commercial vehicle comprising a spring brake actuator (1) according to any one of the preceding claims.
